# EUROPEAN PATENT APPLICATION

(11) **EP 4 831 920 A1**
(43) Date of publication of application: **28.10.2026**
(21) Application number: 25171903.5
(22) Date of filing: 23.04.2025
(51) Int. Cl.: G06T 7/33, G06V 10/82

(54) **UNCERTAINTY QUANTIFICATION FOR POINT CLOUD REGISTRATION**

(71) Applicant: Siemens Aktiengesellschaft, 80333 München (DE)
(72) Inventor: Misik, Adam, 80797 München (DE); Brock, Heike, 80799 München (DE)
(74) Representative: Siemens Patent Attorneys

(57) **Abstract**

The invention relates to a system (100) for point cloud registration of point clouds (X, Y) of a physical object, the system comprising:
- an input unit (101) that is configured to read in a first point cloud (X) and a second point cloud (Y), wherein each point cloud (X, Y) represents at least one part of the physical object,
- an alignment unit (102) that is configured to align the first point cloud (X) with the second point cloud (Y), resulting in a translated first point cloud (X*), a respective initial rotation matrix and a respective initial translation matrix,
- a processing unit (103) that is configured to extract equivariant features (F_X*, F_Y) of the translated first point cloud (X*) and of the second point cloud (Y) and to derive an uncertainty score (u) based on said equivariant features, wherein the uncertainty score (u) reflects the alignment uncertainty of the initial rotation and translation by the alignment unit,
and
- an output unit (104) that is configured to provide the uncertainty score (u).

## Description

The present invention relates to a system and a computer-implemented method for point cloud registration of point clouds of a physical object, as well as a computer program product.

Point cloud registration is a crucial task for many applications, as for example in 3D computer vision, that aligns 3D data by estimating transformations between point clouds. Given several sets of points in different coordinate systems, the aim of point cloud registration is to find the transformation, i.e., rotation and/or translation, that best aligns all of them into a common coordinate system. It is widely used in mixed reality, robotics applications, in factory automation and/or additive manufacturing. For example, point cloud registration is required in robotic positioning, object grasping, and/or part alignment.

Despite advances with deep learning techniques, uncertainties for example from noise, occlusions, and/or partial overlap remain challenging, often compromising registration accuracy and robustness.

Uncertainty quantification is a promising direction to address these challenges by providing confidence estimates in the transformation estimate, enabling more reliable and robust point cloud registration. Existing uncertainty quantification methods, however, usually rely on sampling-based techniques, but fail to explicitly quantify uncertainties in the final transformation estimate and are computationally expensive for real-time scenarios.

It is therefore an objective of the present invention to provide an improved method for uncertainty quantification for point cloud registration.

The object is solved by the features of the independent claims. The dependent claims contain further developments of the invention.

The invention provides according to the first aspect a system for point cloud registration of point clouds of a physical object, the system comprising:
- an input unit that is configured to read in a first point cloud and a second point cloud, wherein each point cloud represents at least one part of the physical object,
- an alignment unit that is configured to align the first point cloud with the second point cloud, resulting in a translated first point cloud, a respective initial rotation matrix and a respective initial translation matrix,
- a processing unit that is configured to extract equivariant features of the translated first point cloud and of the second point cloud and to derive an uncertainty score based on said equivariant features, wherein the uncertainty score reflects the alignment uncertainty of the initial rotation and translation by the alignment unit,
   and
- an output unit that is configured to provide the uncertainty score.

Point cloud registration refers to alignment of at least two point clouds. A point cloud of a physical object can for example be provided by scanning the physical object using a scanner.

It is an advantage of the present invention to enable uncertainty quantification and potential registration refinement in a computationally efficient manner. This can significantly improve the accuracy, reliability, and robustness of applications relying on precise 3D data alignment, such as for example, robotic grasping.

The proposed system is furthermore based on a sampling-free uncertainty quantification, in particular, using equivariant features. The rotation of a point cloud can be directly derived from the equivariant features, such that an alignment uncertainty can be easily determined based on the equivariant features. The proposed system and method are therefore computationally more efficient than sampling-based approaches.

According to a preferred embodiment, the system may further comprise a refinement unit that is configured
- to refine the initial rotation matrix and the initial translation matrix provided by the alignment unit based on the uncertainty score and
- to output a refined rotation matrix and a refined translation matrix to be applied to the first point cloud.

Depending on the uncertainty score derived beforehand, the originally derived registration matrices can be refined. To this end, the uncertainty score can for example modulate the refinement. For example, the original transformation matrix can therefore be adapted depending on the derived uncertainty, e.g., in order to minimize alignment errors.

According to an embodiment the system may further comprise an application unit that is configured to apply the refined rotation matrix and the refined translation matrix to the first point cloud.

Therefore, an initial point cloud registration can be optimized and the accuracy of an application, e.g., a robotic grasping application, can be further improved.

According to a further embodiment the alignment unit may be based on a first machine learning model.

The initial alignment / registration of the two point clouds can for example be performed by using a trained neural network. The first machine learning model can for example be trained based on a large sample of point clouds with known transformation matrices in order to train the first machine learning model to estimate the respective translation and rotation matrices.

According to a further embodiment the processing unit may be based on a second machine learning model that is trained to provide an optimized uncertainty score using introspective learning of errors of the first machine learning model.

The errors or alignment errors are preferably given as part of the training data for training the first machine learning model. The training of the second machine learning model then preferably focuses on minimizing the deviation between the (alignment) errors and the estimated uncertainty score, in order to train the second machine learning model to provide an optimized uncertainty score.

According to a further embodiment the equivariant features may be extracted by the second machine learning model mapping the translated first point cloud and the second point cloud to respective graph representations using a k-nearest neighbour search and subsequently by using a vector neuron framework.

According to a further embodiment the uncertainty score may be derived from the equivariant features of the second machine learning model using multi-layer perceptrons (MLPs) of the second machine learning model.

According to a further embodiment the refinement unit may be based on a third machine learning model and self-attention mechanism predicting rotation and translation refinement terms.

According to a further embodiment the equivariant features may be *SO*(3) equivariant.

The invention provides according to a second aspect a computer-implemented method for point cloud registration of point clouds of a physical object, the method comprising the steps:
- reading in a first point cloud and a second point cloud, wherein each point cloud represents at least one part of the physical object,
- aligning the first point cloud with the second point cloud, resulting in a translated first point cloud, a respective initial rotation matrix and a respective initial translation matrix,
- extracting equivariant features of the translated first point cloud and of the second point cloud,
- deriving an uncertainty score based on said equivariant features, wherein the uncertainty score reflects the alignment uncertainty of the initial rotation and translation by the alignment unit,
   and
- providing the uncertainty score.

In addition, a computer program product (non-transitory computer readable storage medium having instructions, which when executed by a processor, performs actions) having program instructions for performing the aforementioned method according to embodiments of the invention is claimed.

The invention will be explained in more detail by reference to the accompanying figures.
- Fig. 1:: a first exemplary embodiment of the system according to the invention for point cloud registration of point clouds of a physical object;
- Fig. 2:: a second exemplary embodiment of the system according to the invention for point cloud registration of point clouds of a physical object; and
- Fig. 3:: an exemplary embodiment of the computer-implemented method according to the invention for point cloud registration of point clouds of a physical object.

Equivalent parts in the different figures are labeled with the same reference signs.

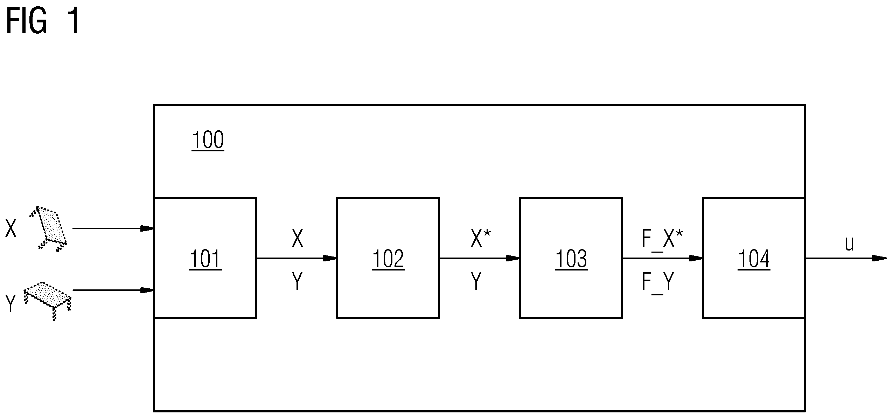

Figure 1 shows a first exemplary embodiment of a system 100 for point cloud registration of at least two point clouds X, Y, each representing a physical object. The system 100 provides a sampling-free method for determining a registration/alignment uncertainty for aligning the at least two point clouds X, Y. For example, the system 100 may be part of or assigned to a robotic grasping unit for grasping the physical object, improving the grasping accuracy. Alternatively, the system 100 may be used in factory automation and/or additive manufacturing.

The system 100 comprises an input unit 101, an alignment unit 102, a processing unit 103, and an output unit 104. The system 100 may further comprise a processor.

The input unit 101 is configured to read in the first point cloud X and the second point cloud Y, wherein each point cloud X, Y represents at least one part of the physical object. For example, the point clouds X, Y can originate from two different scanners, each of which scans the physical object from a different perspective. Alternatively, only the first point cloud X is provided by the scanner, wherein the second point cloud Y (also referred to as target point cloud) is provided for comparison by a storage unit.

The alignment unit 102 is configured to align the first point cloud X with the second point cloud Y, resulting in a translated first point cloud X*. To this end, a respective initial rotation matrix and a respective initial translation matrix is determined. The alignment may be based on a first machine learning method, e.g., a neural network, that is trained to provide the initial rotation matrix and initial translation matrix for aligning the first point cloud X with the second point cloud Y. The alignment unit 102 provides initial alignment, also referred to as registration. The alignment unit 102 may hence be also referred to as registration unit or registration backbone.

The alignment unit 102 therefore transforms a source point cloud 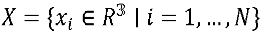 into a translated point cloud *X** with a predicted initial rotation *R*₀ ∈ *SO*(3) and translation 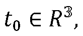 aligning it with the target point cloud 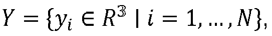 where *N* denotes the number of points.

The processing unit 103 is configured to extract equivariant features F_X*, F_Y of the translated first point cloud X* and of the second point cloud Y, wherein the equivariant features F_X*, F_Y preferably are *SO*(3) equivariant. Furthermore, the processing unit 103 is configured to derive an uncertainty score u based on said equivariant features F_X*, F_Y, wherein the uncertainty score u reflects the alignment uncertainty of the initial rotation and translation by the alignment unit. The processing unit 103 is therefore configured to determine the uncertainty of the alignment by analysing the alignment of the respective equivariant features F_X*, F_Y.

The processing unit 103 is preferably based on a second machine learning model that is trained to provide an optimized uncertainty score using introspective learning of errors of the first machine learning model. The second machine learning model may for example be a neural network.

The equivariant features F_X*, F_Y may be extracted by the second machine learning model, wherein the second machine learning model is trained to map the translated first point cloud X* and the second point cloud Y to respective graph representations using a k-nearest neighbour search and subsequently by using a vector neuron framework.

The proposed approach provides therefore uncertainty estimates for point cloud registration, reflecting confidence in the alignment while being robust to arbitrary poses. To achieve this, equivariant learning is employed for uncertainty quantification. This involves extraction of *SO*(3) equivariant features that preserve pose information of the first and second point cloud *X** and *Y* in the feature space. Given their well-defined behavior under rotations, *SO*(3) equivariant features enhance the consistency of uncertainty regression by minimizing variations in the feature space. Moreover, *SO*(3) equivariant features serve as a natural form of data augmentation, exposing the model to diverse transformations, thereby enhancing its ability to generalize and perform robustly across different scenarios.

The second machine learning model network may be based on a Vector Neuron (VN) framework. Unlike conventional scalar neurons, the VN framework utilizes vector-valued neurons and achieves *SO*(3) equivariance by applying linear transformations to these neurons. This approach preserves geometric relationships and symmetries throughout the architecture, making it well-suited for processing 3D data like point clouds. In the proposed equivariant feature extraction, both point clouds are preferably mapped to their graph representations based on a k-nearest neighbor search. Then, a VN-encoder with *M* consecutive VN-Multilayer Perceptrons (MLPs) may be used to extract equivariant point features 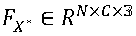 and 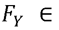 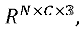 where *C* denotes the feature dimension. The equivariant point features *F_{X*}* and *F_{Y}* are stacked and max pooling is performed along the point dimension to obtain a global feature. Finally, an multi-layer perceptron (MLP) may be used to regress the uncertainty score 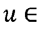 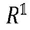 from the global feature. While the regression is not equivariant, it operates on equivariant features that encode pose information important for uncertainty quantification.

The uncertainty score u is hence derived by the processing unit 103 from the equivariant features F_X*, F_Y using multi-layer perceptron's (MLPs) of the second machine learning model.

The output unit 104 is configured to provide the uncertainty score u. The uncertainty score u may for example be used to quantify an alignment accuracy.

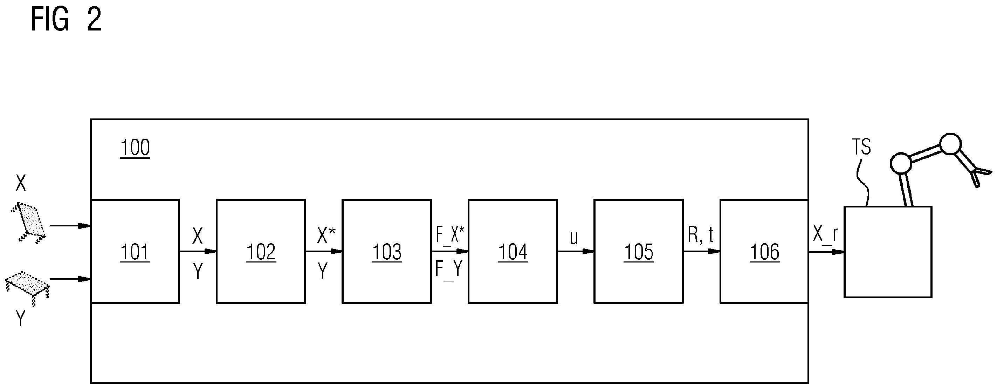

Figure 2 shows a second exemplary embodiment of the system 100 for point cloud registration of point clouds X, Y of a physical object. The system 100 may be implemented as part of a controller for controlling a robot TS.

The system comprises an input unit 101, an alignment unit 102, a processing unit 103 and an output unit 104, as described with respect to Fig. 1. Furthermore, the system 100 comprises a refinement unit 105 and an application unit 106.

The refinement unit 105 is configured to refine the initial rotation matrix and the initial translation matrix provided by the alignment unit based on the uncertainty score u, and to output a refined rotation matrix and a refined translation matrix R, t to be applied to the first point cloud X.

The refinement unit 105 is preferably based on a third machine learning model and a self-attention mechanism predicting rotation and translation refinement terms.

The application unit 106 is configured to apply the refined rotation matrix and the refined translation matrix R, t to the first point cloud X, providing a translated first point cloud X_r.

The refined rotation and translation matrix R, t and/or the translated first point cloud X_r may then be used as input for controlling the robot TS.

Given an uncertainty estimate *u,* the initial rotation and translation, that is obtained from the point cloud registration backbone is refined. To be able to refine the initial transformation estimates, a PointNet-based refinement encoder with shared weights may be used that extracts point-wise features ${F}_{X *}^{R} ∈ {R}^{N \times C}$ and ${F}_{Y}^{R} ∈ {R}^{N \times C}$ from the two point clouds *X*, Y.*

The uncertainty score *u* is used as a basis for the registration refinement, aiding in predicting the degree of rotation and translation refinement terms.

The refinement unit 105 therefore may first unfold *u* by using an unfolding MLP to a point-wise uncertainty score *u^{P}* ∈ *R^{N}.* We then use a self-attention mechanism to weight ${F}_{X *}^{R}$ and ${F}_{Y}^{R}$ based on the predicted uncertainty *u^{P}.* Then ${F}_{X *}^{R}$ is projected to queries $Q = {W}_{Q} {F}_{X *}^{R}$, keys $K = {W}_{K} {F}_{X *}^{R}$, and values $V = {W}_{V} {F}_{X *}^{R}$ by using linear projection matrices. Then self-attention scores are weighted by the point-wise uncertainty estimates *u^{P}* to obtain uncertainty-weighted attention scores *aᵤ*: ${a}_{u} = softmax \left(\frac{{QK}^{T}}{\sqrt{C}}\right) {u}^{P}$

By weighting self-attention scores with uncertainty, the self-attention module learns to adaptively assign weights to points, adjusting their importance for refinement prediction based on their contribution to registration uncertainty. The uncertainty-adjusted feature ${F}_{X *}^{R}$ may then be obtained as ${F}_{X *}^{R} = {F}_{X *}^{R} + {a}_{u} V$.

Same self-attention operation may be performed for ${F}_{Y}^{R}$, and stack ${F}_{X *}^{R}$ and ${F}_{Y}^{R}$ along their point dimension. Then MLP-based rotation and translation prediction heads may be used to predict rotation and translation refinement terms (Δ*R* , Δ*t* ). Using the refinement terms, the final rotation *R_{F}* = Δ*RR*₀ and translation *t_{F} = t*₀ + Δ*t* may be determined and applied.

An introspective learning strategy may be adopted to the uncertainty quantification and/or refinement mechanism. First, the registration backbone as per the respective implementation is trained. Then the registration backbone is fixed and the machine learning model of the processing unit 103 is trained based on the registration errors made by the registration backbone 102 on the training set. A registration error metric *E_{RT}*, is provided as the supervision signal by summing the relative rotation error (RRE) and relative translation error (RTE) made by the registration backbone over a batch of training samples *B*. Then an L2-based loss function is derived to train our uncertainty quantification module as follows: ${L}_{UQ} = {\left‖{E}_{RT}-u\right‖}_{2}$

By minimizing 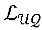 *,* the second machine learning model may be trained to output well-calibrated and reliable uncertainty estimates that closely match the actual registration errors. Furthermore, to train the registration refinement module, a registration refinement loss 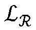 may be employed based on angular- and L1-distances defined as: ${L}_{R} = \frac{3 - Tr \left({R}_{GT}{R}_{F}^{T}\right)}{4} + {\left‖{t}_{GT}-{t}_{F}\right‖}_{1} ,$ which minimizes the error between *R_{F}, t_{F}* and the ground truth transformation *R_{GT}, t_{GT}.* The total loss is then given as: 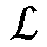 *=* ω₁ 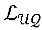 + ω₂ 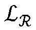 ,where ω₁ and ω₂ are hyperparameters controlling the contribution of each loss component.

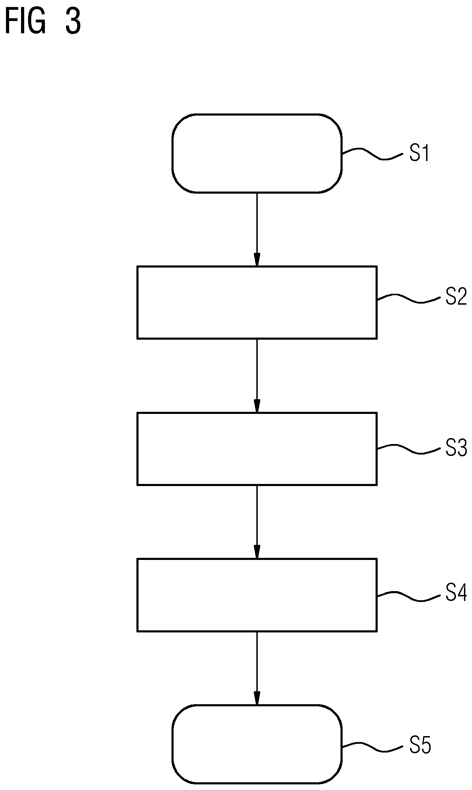

Figure 3 shows an exemplary embodiment of a computer-implemented method for point cloud registration of point clouds of a physical object.

The method comprises the following steps:
In a first step S1 a first point cloud and a second point cloud are read in, wherein each point cloud represents at least one part of the physical object.

In a next step S2 the first point cloud is aligned with the second point cloud, resulting in a translated first point cloud, a respective initial rotation matrix and a respective initial translation matrix.

In a next step S3 equivariant features of the translated first point cloud (or the first point cloud) and of the second point cloud are extracted.

In a next step S4 an uncertainty score is derived based on said equivariant features, wherein the uncertainty score reflects the alignment uncertainty of the initial rotation and translation by the alignment unit.

In a next step S5 the uncertainty score is provided, e.g., for refining the point cloud registration.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for point cloud registration of point clouds (X, Y) of a physical object, the system comprising:
- an input unit (101) that is configured to read in a first point cloud (X) and a second point cloud (Y), wherein each point cloud (X, Y) represents at least one part of the physical object,
- an alignment unit (102) that is configured to align the first point cloud (X) with the second point cloud (Y), resulting in a translated first point cloud (X*), a respective initial rotation matrix and a respective initial translation matrix,
- a processing unit (103) that is configured to extract equivariant features (F_X*, F_Y) of the translated first point cloud (X*) and of the second point cloud (Y) and to derive an uncertainty score (u) based on said equivariant features, wherein the uncertainty score (u) reflects the alignment uncertainty of the initial rotation and translation by the alignment unit,
and
- an output unit (104) that is configured to provide the uncertainty score (u).

2. System according to claim 1 further comprising a refinement unit (105) that is configured
- to refine the initial rotation matrix and the initial translation matrix provided by the alignment unit based on the uncertainty score (u),
and
- to output a refined rotation matrix and a refined translation matrix (R, t) to be applied to the first point cloud (X).

3. System according to claim 2, further comprising an application unit (106) that is configured to apply the refined rotation matrix and the refined translation matrix (R, t) to the first point cloud (X).

4. System according to one of the preceding claims, wherein the alignment unit (102) is based on a first machine learning model.

5. System according to claim 4, wherein the processing unit (103) is based on a second machine learning model that is trained to provide an optimized uncertainty score using introspective learning of errors of the first machine learning model.

6. System according to claim 5, wherein the equivariant features (F_X*, F_Y) are extracted by the second machine learning model mapping the translated first point cloud (X*) and the second point cloud (Y) to respective graph representations using a k-nearest neighbour search and subsequently by using a vector neuron framework.

7. System according to claim 5 or 6, wherein the uncertainty score (u) is derived from the equivariant features (F_X*, F_Y) of the second machine learning model using multi-layer perceptrons of the second machine learning model.

8. System according to claim 2, wherein the refinement unit (105) is based on a third machine learning model and self-attention mechanism predicting rotation and translation refinement terms.

9. System according to one of the preceding claims, wherein the equivariant features (F_X*, F_Y) are *SO*(3) equivariant.

10. Computer-implemented method for point cloud registration of point clouds of a physical object, the method comprising the steps:
- reading (S1) in a first point cloud (X) and a second point cloud (Y), wherein each point cloud (X, Y) represents at least one part of the physical object,
- aligning (S2) the first point cloud (X) with the second point cloud (Y), resulting in a translated first point cloud (X*), a respective initial rotation matrix and a respective initial translation matrix,
- extracting (S3) equivariant features (F_X*, F_Y) of the translated first point cloud (X*) and of the second point cloud (Y),
- deriving (S4) an uncertainty score based on said equivariant features, wherein the uncertainty score reflects the alignment uncertainty of the initial rotation and translation by the alignment unit,
and
- providing (S5) the uncertainty score.

11. Computer program product directly loadable into the internal memory of a digital computer, comprising software code portions for performing the method steps of claim 10 when said computer program product is run on the computer.
